# EUROPEAN PATENT APPLICATION

(11) **EP 3 323 713 A1**
(43) Date of publication of application: **23.05.2018**
(21) Application number: 16199342.3
(22) Date of filing: 17.11.2016
(51) Int. Cl.: B64C 9/32, B64C 9/12, B64C 5/02, B64C 5/06, B64C 9/00

(54) **AIR BRAKE SYSTEM FOR AIRCRAFT**

(71) Applicant: Airbus Operations S.L., 28906 Getafe (ES)
(72) Inventor: López López, Ladislao, 28906 Madrid (ES)

(57) **Abstract**

The object of this invention is relative to an air brake system for aircraft able to use a set of control surfaces 42, 43, 44, 45, 46, 52, 53, 54, 55, 56, such as:
- slats 45, 46, 55, 56, mounted on leading edge 47, 57 of each wing 40, 50 of the aircraft 10, able to extent to the front of the wings 40, 50, in order to reduce the stall speed by altering the air flow over the wings 40, 50;
- flaps 44, 54, mounted on the trailing edge 48, 58 of each wing 40, 50 of the aircraft , able to extent to the rear of the wings 40, 50, in order to reduce the stall speed by altering the air flow over the wings 40, 50;
- spoilers 42, 43, 52, 53, located over each wings 40, 50 of the aircraft 10, able to disrupt airflow over the wings 40, 50 and greatly reduce lift;
characterized in that, said air brake system comprise additionally,
- aircraft stabilizers 60, 70, comprising movable control surfaces 61, 62, 71 such as said control surfaces 61, 62, 71 are respectively split in the spanwise direction in at least two parts 61 a, 61 b, 62a, 62b, 71 a, 71 b, configured to be deployed desynchronously when the aircraft touches down.

## Description

### OBJECT OF THE INVENTION

The present invention pertains to the aeronautical field, and refers to an aircraft brake system and a process able to manage this system to provide deceleration and shorter landing distances.

An object of the invention is to provide additional means in order to improve air brake system of aircraft.

### BACKGROUND OF THE INVENTION

Commercial aircraft 10 may include a set of brake systems, such as:
- Landing gear brake, this brake is performed in the body landing gear 20 while the aircraft 10 is touching the ground called also "touchdown";
- thrust reversers, that allow thrust from the engines 30 to be used to slowdown the aircraft 10;
- air brakes system, dedicated flight control surfaces 42, 43, 44, 45, 52, 53, 54, 55, able to work in order to increase the drag to reduce the velocity to allow the landing phase. Currently the air brake systems of commercial aircraft use exclusively the dedicated flight control surfaces 42, 43, 44, 45, 52, 53, 54, 55 of each wings 40, 50.

It's well known that aircrafts 10 comprise a set of control surfaces in order to allow to the pilot to control easily the different movement of the aircraft 10 during the take-off, cruise, approaching and landing phases. Particularly during the critical phases of flight, such as approaching and landing phases, these control surfaces 41, 42, 43, 44, 45, 51, 52, 53, 54, 55, play an additional role in order to slowdown the aircraft 10, while the pilot try to keep under control attitude and stability of the aircraft 10 in a low-speed condition.

Modern aircrafts are generally equipped with two basic kind of control surfaces. A primary kind of flight control surfaces allow to control the aircraft torques around their main axis, such as:
- ailerons 41, 51, mounted on the trailing edge 48, 58 of each wing 40, 50 near the wing tips 49, 59, in order to control the roll R rotation,
- elevators 61, 62, moveable part of the Horizontal Tail Plane ("HTP") 60 of the empennage 15 to control the pitch P rotation of the aircraft, and
- a rudder 71 typically mounted on the trailing edge of the Vertical Tail Plane ("VTP") 70 of the empennage 15 in order to control the yaw Y rotation of the aircraft 10.

A second kind of flight control surfaces comprising high-lift devices such as:
- slats 45, 55, also known as leading edge 47, 57 devices, are extensions to the front of a wing 40, 50 for lift augmentation, and are intended to reduce the stall speed by altering the air flow over the wing 40, 50.
- flaps 44, 54, mounted on the trailing edge 58 of each wing 40, 50.
- spoilers 42, 52, used to disrupt airflow over the wing 40, 50 and greatly reduce lift, allow a glider pilot to lose altitude without gaining excessive airspeed. These second kind of flight control surfaces tend to lower the minimum speed at which the aircraft 10 can be safely flown, and to increase the angle of descent for landing.

All those surfaces are extended or deployed during critical phases as approaching or landing, and are controlled by a Flight Management System ("FMS") of the aircraft to operate safely. Once the aircraft 10 touches down, the flight control system (FMS) via a brake control system deploys air brakes such as spoilers 42, 52, placed on the wing 40, 50 to slowdown the aircraft 10 assisting the brake system, in addition to the landing gear break system and the thrust reverse mode.

The majority of the flight control surfaces 41, 42, 43, 44, 45, 51, 52, 53, 54, 55, are allocated on the wings 40, 50, because they are spacer aerodynamic surface than the VTP 70 or HTP 60.

Day by days, big airports are saturated by the number of arrival and departure of flight, and often aircrafts 10 turn around airports in expecting to receive the greenlight in order to proceed to the landing phase. The number of aircrafts 10 continue to increase, but airports are not extendable at the infinite in order to receive them. For the moment, it is difficult to decrease the time due for the take-off phase, but the need exist to reduce the landing phase in order to receive more aircrafts 10.

### SUMMARY OF THE INVENTION

In order to solve the drawback stated above, the present invention define in the independent and dependent attached claims an air brake system for aircraft such as with the same flight control surface available, it is possible to increase the drag and consequently reduce the landing phase.

A first object of the invention is relative to an aircraft stabilizer comprising movable control surfaces, able to provide longitudinal and/or directional stability and control to an aircraft, such as each control surface is split in the spanwise direction in at least two parts, configured to be deployed desynchronously when the aircraft touches down.
In a preferred embodiment of the invention, the respective parts of each control surface are consecutively deployed in opposite direction.

A second object of the invention is relative to an air brake system for aircraft able to use a set of control surfaces, such as:
- a set of slats, mounted on leading edge of each wing of the aircraft, able to extent to the front of the wings, in order to reduce the stall speed by altering the air flow over the wings;
- a set of flaps, mounted on the trailing edge of each wing of the aircraft, able to extent to the rear of the wings, in order to reduce the stall speed by altering the air flow over the wings;
- a set of spoilers, located over each wings of the aircraft, able to disrupt airflow over the wings and greatly reduce lift; and,
- aircraft stabilizers, comprising movable control surfaces such as said control surfaces are respectively split in the spanwise direction in at least two parts, configured to be deployed desynchronously when the aircraft touches down.

In a preferred embodiment of the invention, the respective parts of each control surface are consecutively deployed in opposite direction.

A third object of the invention is relative to a brake control systems for aircraft able to manage the different brake systems via the activation of:
- a landing gear brake, performed in the body landing gear while the aircraft touches down, and/or
- thrust reversers, to allow to use the thrust from the engines to slow down the aircraft when the said aircraft touches down, and/or
- an air brakes systems comprising:
   - a dedicated flight control surfaces on the wings, able to work sequentially in order to increase the drag to reduce the velocity and the angle of approach to allow the landing phase,
   - a movable control surfaces of the aircraft stabilizer according the previous claims, split in the spanwise direction in at least two parts, configured to be deployed desynchronously when the aircraft touches down.

### BRIEF DESCRIPTION OF THE DRAWINGS

To complete the description and in order to provide for a better understanding of the invention, a set of drawings is provided. Said drawings form an integral part of the description and illustrate preferred embodiments of the invention. The drawings comprise the following figures:
Preferred embodiments of the invention are henceforth described with reference to the accompanying drawings, wherein:
   Figure 1, shows a schematic representation of an aircraft according to the state of art.
   Figure 2, shows a schematic representation of aircraft stabilizer according to a preferred embodiment to the invention.

### DETAILED DESCRIPTION OF THE DRAWINGS

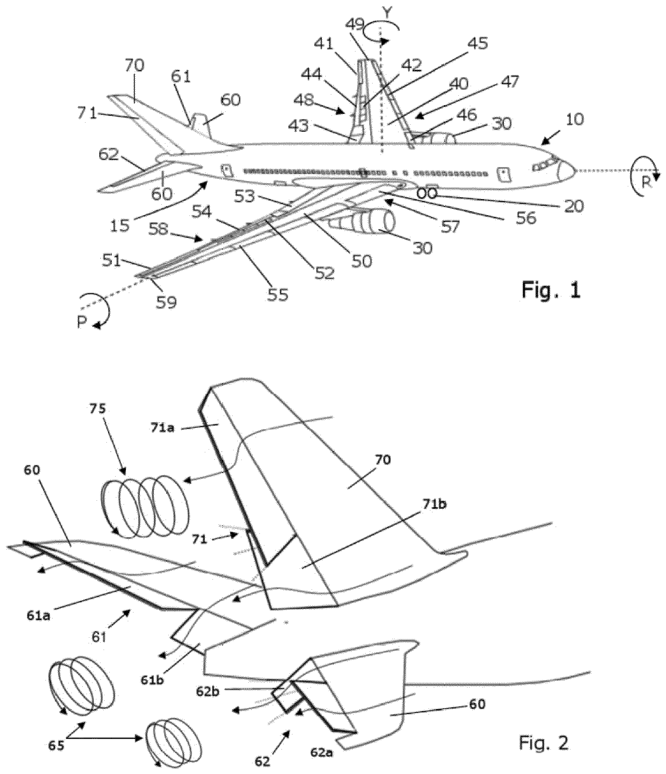

The present invention is directed generally toward air brakes systems, and associated systems. Several embodiments of the systems and process to manage this systems are described below. A person skilled in the relevant art will understand, however, that the invention may have additional embodiments, and that the invention may be practiced without several of the details of the embodiments described below with reference to figure 2.

The figure 2 is showing an empennage 15 comprising a set of aircraft stabilizer, such as a Horizontal Tail Plane 60, and a Vertical Tail Plane 70. The Horizontal Tail Plane 60 comprises respectively a left 61 and right 62 movable control surfaces. The Vertical Tail Plane 70 comprises a movable control surface 71. The movable control surface 61, 62, 71 are respectively able to provide a longitudinal and/or directional stability and control to an aircraft 10. According to the invention, each control surface 61, 62, 71 is respectively split in the spanwise direction in at least two parts 61 a, 61 b, 62a, 62b, 71 a, 71 b, configured in order to be deployed desynchronously when the aircraft 10 touches down in order to increase the drag 65, 75.

In a preferred embodiment, the right 61a, 61b and left 62a, 62b parts respectively of the control surfaces 61, 62, of the elevator 60 are consecutively deployed in a opposite direction, such as to create a drag 65. The parts 71 a, 71 b of the control surface 71 are consecutively deployed in opposite direction such as to create a drag 75.

According to the invention, the air brake system of the aircraft 10 is able to use the set of the classical control surfaces 42, 43, 44, 45, 46, 52, 53, 54, 55, 56, such as:
- the set of slats 45, 46, 55, 56, mounted on leading edge 47, 57 of each wing 40, 50 of the aircraft 10. This set of slats is able to extent to the front of the wings 40, 50, in order to reduce the stall speed by altering the air flow over the wings 40, 50;
- the set of flaps 44, 54, mounted on the trailing edge 48, 58 of each wing 40, 50 of the aircraft 10. This set of flaps 44, 54, is able to extent to the rear of the wings 40, 50, in order to reduce the stall speed by altering the air flow over the wings 40, 50;
- the set of spoilers 42, 43, 52, 53, located over each wings 40, 50 of the aircraft 10 This set of spoilers is able to disrupt the airflow over the wings 40, 50 and greatly reduce lift;

Furthermore to these classical control surfaces previously mentioned, the air brake system according to the invention is able to activate additionally:
- either the movable control surfaces 61, 62 of the Horizontal Tail Plane such as said control surfaces 61, 62 being respectively split in the spanwise direction in at least two parts 61 a, 61 b for the left side and 62a, 62b for the right side. The said part 61 a, 61 b, 62a, 62b are able to move by independent actuators configured to be synchronized in all different movement of the aircraft 10, such as during the take-off, cruise, approaching and landing phases. The said activators of the part 61 a, 61 b, 62a, 62b are able to be deployed de-synchronized on request of the pilot on the Flight Management System exclusively when the aircraft touches down; or,
- the movable control surface 71 of the Vertical Tail Plane such as said control surface 71 being split in the spanwise direction in at least two parts 71 a, 71 b. The said part 71 a, 71 b are able to move by independent activators configured to be synchronized in all different movement of the aircraft 10, such as during the take-off, cruise, approaching and landing phases. The said activators of the part 71 a, 71 b, are able to be deployed de-synchronized on request of the pilot on the Flight Management System exclusively when the aircraft touches down; or,
- both of these movable control surfaces able to be used together in de-synchronized mode to increase the drag 65, 75.

The invention has also as object a brake control systems for aircraft 10 able to manage the different brake systems via the activation of:
- a landing gear brake, this brake is performed in the body landing gear 20 while the aircraft 10 touches down, and/or
- thrust reversers, to allow to use the thrust from the engines 30 to slow down the aircraft 10 when the said aircraft touches down, and/or
- air brakes systems comprising:
   - dedicated flight control surfaces 42, 43, 44, 45, 46, 52, 53, 54, 55, 56 on the wings 40, 50, able to work sequentially in order to increase the drag to reduce the velocity and the angle of approach to allow the landing phase,
   - movable control surfaces 61, 62, 71 of the aircraft stabilizer 60, 70, split in the spanwise direction in at least two parts 61 a, 61 b, 62a, 62b, 71 a, 71 b, configured to be deployed desynchronously when the aircraft touches down.

From the foregoing, it will be appreciated that specific embodiments of the invention have been described herein for purposes of illustration, but that various modifications may be made without deviating from the spirit and scope of the invention. For example, aspects of the invention described in the context of particular embodiments may be combined or eliminated in other embodiments. Although advantages associated with certain embodiments of the invention have been described in the context of those embodiments, other embodiments may also exhibit such advantages. Additionally, none of the foregoing embodiments need necessarily exhibit such advantages to fall within the scope of the invention. Accordingly, the invention is not limited except as by the appended claims.

## Claims

1. Aircraft stabilizer (60, 70) comprising movable control surfaces (61, 62, 71), able to provide longitudinal (61, 62) and/or directional (71) stability and control to an aircraft (10), **characterized in that** each control surface (61, 62, 71) is split in the spanwise direction in at least two parts (61 a, 61 b, 62a, 62b, 71 a, 71 b), configured to be deployed desynchronously when the aircraft touches down.

2. Aircraft stabilizer (60, 70) according to claim 1, wherein the respective parts (61 a, 61 b, 62a, 62b, 71 a, 71 b) of each control surface (61, 62, 71) are consecutively deployed in opposite direction.

3. Air brake system for aircraft able to use a set of control surfaces (41, 42, 43, 44, 45, 46, 51, 52, 53, 54, 55, 56), such as:
- slats (45, 46, 55, 56), mounted on leading edge (47, 57) of each wing (40, 50) of the aircraft (10), able to extent to the front of the wings (40, 50), in order to reduce the stall speed by altering the air flow over the wings (40, 50);
- flaps (44, 54), mounted on the trailing edge (48, 58) of each wing (40, 50) of the aircraft, able to extent to the rear of the wings (40, 50), in order to reduce the stall speed by altering the air flow over the wings (40, 50);
- Spoilers (42, 43, 52, 53), located over each wings (40, 50) of the aircraft (10), able to disrupt airflow over the wings (40, 50) and greatly reduce lift;
**characterized in that**, said air brake system comprise additionally,
- Aircraft stabilizers (60, 70) according to claim 1 and 2, comprising movable control surfaces (61, 62, 71) such as said control surfaces (61, 62, 71) are respectively split in the spanwise direction in at least two parts (61 a, 61 b, 62a, 62b, 71 a, 71 b), configured to be deployed desynchronously when the aircraft touches down.

4. Air brake system for aircraft according to claim 3, where in the respective parts (61a, 61b, 62a, 62b, 71a, 71b) of each control surface (61, 62, 71) are consecutively deployed in opposite direction.

5. Brake Control Systems for aircraft (10) able to manage the different brake systems via the activation of:
- a landing gear brake, performed in the body landing gear (20) while the aircraft (10) touches down, and/or
- thrust reversers, to allow to use the thrust from the engines (30) to slow down the aircraft 10 when the said aircraft touches down, and/or
- an air brakes systems comprising:
- a dedicated flight control surfaces (42, 43, 44, 45, 46, 52, 53, 54, 55, 56) on the wings (40, 50), able to work sequentially in order to increase the drag to reduce the velocity and the angle of approach to allow the landing phase,
**characterized in that** the said airbrake comprise also,
- a movable control surfaces (61, 62, 71) of the aircraft stabilizer (60, 70) according the previous claims, split in the spanwise direction in at least two parts (61a, 61b, 62a, 62b, 71a, 71b), configured to be deployed desynchronously when the aircraft touches down.
